# EUROPEAN PATENT APPLICATION

(11) **EP 1 250 836 A2**
(43) Date of publication of application: **23.10.2002**
(21) Application number: 02252311.2
(22) Date of filing: 28.03.2002
(51) Int. Cl.: A01K 1/01

(54) **Disposable containers**

(30) Priority: 29.03.2001 GB 0107874
(71) Applicant: Foundainton Limited, Thirsk, North Yorkshire Y07 3PZ (GB)
(72) Inventor: Nutland, Geoffrey, Thirsk, North Yorkshire Y07 3PZ (GB); Lynch, Michelle, Enfield EN 3 6GL (GB)
(74) Representative: Watson, Anthony Stephen

(57) **Abstract**

A disposable container comprises a box structure formed from a blank which is creased and scored to enable said box structure to be opened from a closed position to an open position, the volume of said box structure in its open position being greater than the volume of the box structure in its closed position, said box structure containing an absorbent material. The box structure may be generally diamond-shaped in its closed position and generally rectangular in its open position, or alternatively the box structure may be generally rectangular or square in both its closed and open positions. The absorbent material may be coir pith or granules and the absorbent material may include a module compressed or protected within a slow release barrier.

## Description

This invention relates to disposable containers, particularly to such containers intended for the disposal of domestic or household waste such as for example cat litter, cooking oil and fat, and for the disposal of commercial and industrial waste such as motor oil and similar and like materials.

The disposal of domestic and commercial wastes as referred to above is a serious problem in many instances, since such wastes of the kinds described, particularly oil and fats and motor oil, cannot be disposed of in the usual way, such as for example by placing the waste in a conventional dustbin or, in the case particularly of commercial and industrial waste such as motor oil, this cannot be 'tipped' due to the fact that the material is non bio-degradable and therefore its disposal may lead to contamination etc.

The present invention therefore seeks to provide a disposable container for household and commercial and industrial waste material which will obviate or lessen the disadvantages of known means or methods of disposal.

According to the present invention there is provided a disposable container comprising a box structure formed from a blank which is creased and scored to enable said box structure to be opened from a closed position to an open position , the volume of said box structure in its open position being greater than the volume of the box structure in its closed position, said box structure containing an absorbent material.

Preferably, the volume of the box structure in its open position will be at least twice as great as the volume of the box structure in its closed position.

Preferably, said blank will be a one-piece blank of cardboard or similar material.

In a first embodiment of the invention, the disposable container will preferably be generally diamond-shaped in cross-section in its closed position and generally rectangular in its open position, and means will preferably be provided to retain the container in its closed position.

In a second embodiment of the invention, the disposable container will be generally rectangular or square in its closed and open positions.

The containers may be wholly or partially lined with impervious material to prevent liquid passing through the walls of the containers.

In order that the invention may be more readily understood, embodiments thereof will now be described, by way of example, reference being made to the accompanying drawings, wherein:
Figure 1 is plan view of a blank from which a disposable container according to a first embodiment of the invention is made;
Figure 2 is a plan view of a disposable container made from the blank of Figure 1;
Figure 3 is a front view on Figure 2 showing the container in an open position;
Figure 4 is a front view showing a plurality of disposable containers of Figures 2 and 3 in stacked and interfitting relationship;
Figure 5 is an end view of the container of Figures 2 and 3 in a partially closed position;
Figure 6 is a view of the container in its fully closed position;
Figure 7 is a plan view of a blank from which a disposable container according to second embodiment of the invention is made;
Figure 8 is a perspective view of a disposable container made from the blank of Figure 7;
Figure 9 is plan view on Figure 8;
Figure 10 is a side perspective view on Figure 8;
Figure 11 is a top view of the container of Figures 8 to 10; and
Figure 12 is a side perspective view of the disposable container in a fully open position.

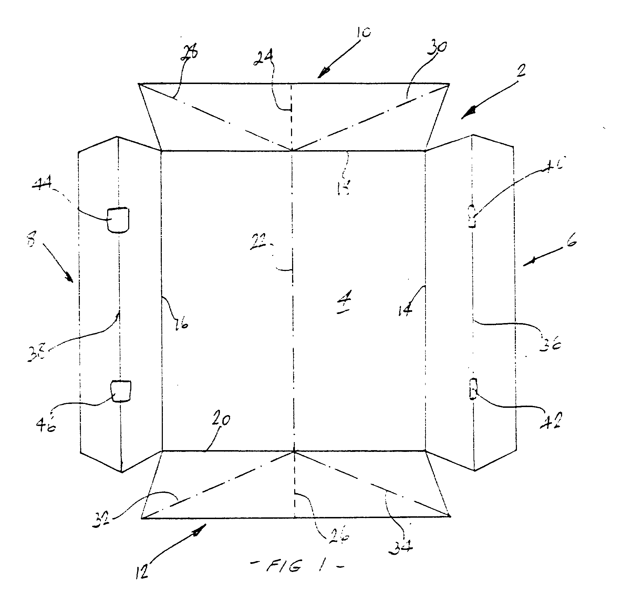

Referring to the accompanying drawings and firstly to Figure 1, the one-piece blank shown in the drawing, composed of a good quality cardboard or like material and indicated generally by reference numeral 2, comprises a base portion 4, side portions 6 and 8, and end portions 10 and 12, the side portions and end portions being distinguished from the base portion 4 by crease lines 14,16 and 18,20 as shown in the drawing.

As will be seen, the base portion 4 has a medial crease line 22, and the end portions 10 and 12 have medial score lines 24 and 26 respectively. The said end portions 10 and 12 additionally have diagonal crease lines 28,30 and 32,34 respectively. The end portions, as shown, are tapered outwardly from the base portion 4.

The side portions 6 and 8 have medial crease lines 36 and 38 respectively and are shaped as shown in the drawing. The side portion 6 is provided with spaced slits or openings 40 and 42 on the medial crease line 36, and the end portion 8 is provided with movable flaps or tabs 44 and 46 which are located about the medial crease line 38 and which are adapted to engage in the slits or openings 40 and 42 as will be explained hereinafter.

If desired, the whole or a part of the surface of the blank may be coated with or may have applied thereto a liquid impervious coating or layer of material.

The blank may be provided with a locking device, in the form of a fold-over strip and locking tab, to provide rigidity in use of the container.

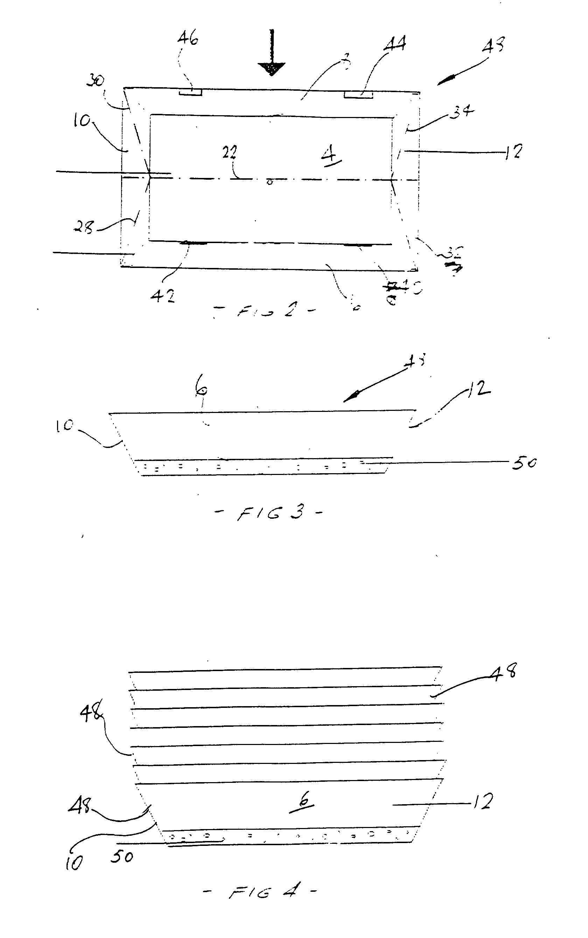

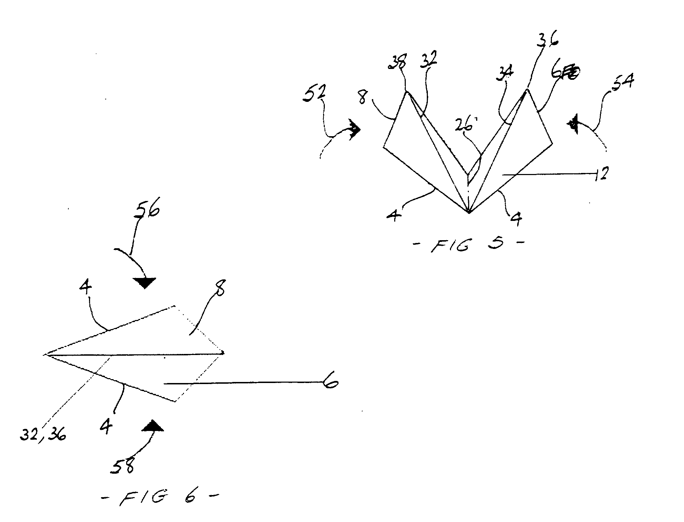

A disposable container formed from the blank of Figure 1 is shown in Figures 2 and 3 and is indicated generally by reference numeral 48. Located in the bottom of the container and formed of the usual material is a predetermined quantity of cat litter indicated by reference numeral 50.

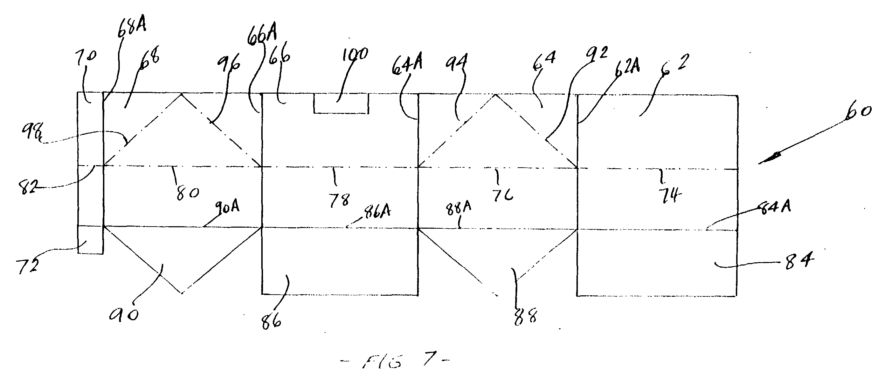

Figure 4 shows a plurality of disposable containers 48 in superposed and stacked relationship for ease of storage.

As will be appreciated, the disposable container 48 will be used by a cat or cats in the position shown in Figures 2 and 3. When it is desired to dispose of the container, referring now to Figure 5, the container 48 holding the soiled litter 50 is folded inwardly in the direction of arrows 52 and 54 and about the medial crease lines 22,24, and 26 such that the two 'halves' of the container move towards one another as shown. Continued movement about said medial lines in the directions of arrows 56 and 58 (Figure 6) moves the container into the fully closed position shown in Figure 6. In this position, the flaps or tabs 44 and 46 are engaged in the slits or openings 40 and 42 in order to retain the container in the closed position and to retain the soiled litter within the container, it being appreciated that any liquid will have been absorbed into the cat litter.

Because the container is effectively 'sealed', the container may be disposed of as household or domestic waste in the usual way.

Instead of the cat litter being loose in the bottom of the disposable box structures, the cat litter may be contained in a tube or bag prior to use.

Instead of the blank of Figure 1 being creased and scored on the end portions 10 and 12, it may be creased and scored on its side portions 6 and 8. In this case, the medial crease line 22 would extend between the side walls 6 and 8, and the medial score lines 24 and 26 would be in the said side walls 6 and 8. Thus, instead of the blank being folded about the medial lines 22, 24, and 26 as described, the blank would be folded about the 'repositioned' crease lines, it being appreciated that a similar box structure to that shown in Figures 5 and 6 would still be produced.

It will be appreciated that the blank of Figure 1 may be modified such that the resultant box structure is generally square or rectangular in cross-section instead of being generally diamond-shaped in cross-section.

Referring now to Figure 7, the one-piece blank shown and indicated by reference numeral 60, comprises rectangular portions 62, 64, 66, and 68, the portion 68 having a smaller rectangular portion 70 which in turn has a small flap 72. The portions 62 and 66 are provided with rectangular flaps 84 and 86 respectively, and the portions 64 and 68 are provided with triangular flaps 88 and 90 respectively, the flaps 84, 86 and 88,90 being provided to form the base of a disposable container as will be hereinafter explained.

The rectangular portions 62, 64, 66, 68 and 70 are each provided with a crease line, these being indicated respectively by reference numerals 74, 76, 78, 80, and 82, and additionally the portions 64 and 68 are each provided with crease lines 92,94 and 96,98 respectively. The rectangular portion 66 is provided with a movable flap 100.

The one-piece blank 60 will preferably be composed of cardboard or similar material, or other material may be used if preferred. The blank may be wholly or partially lined with an impervious material, which may be adhered to the blank or otherwise applied thereto. Suitable materials for this purpose are PVC, polythene and similar materials.

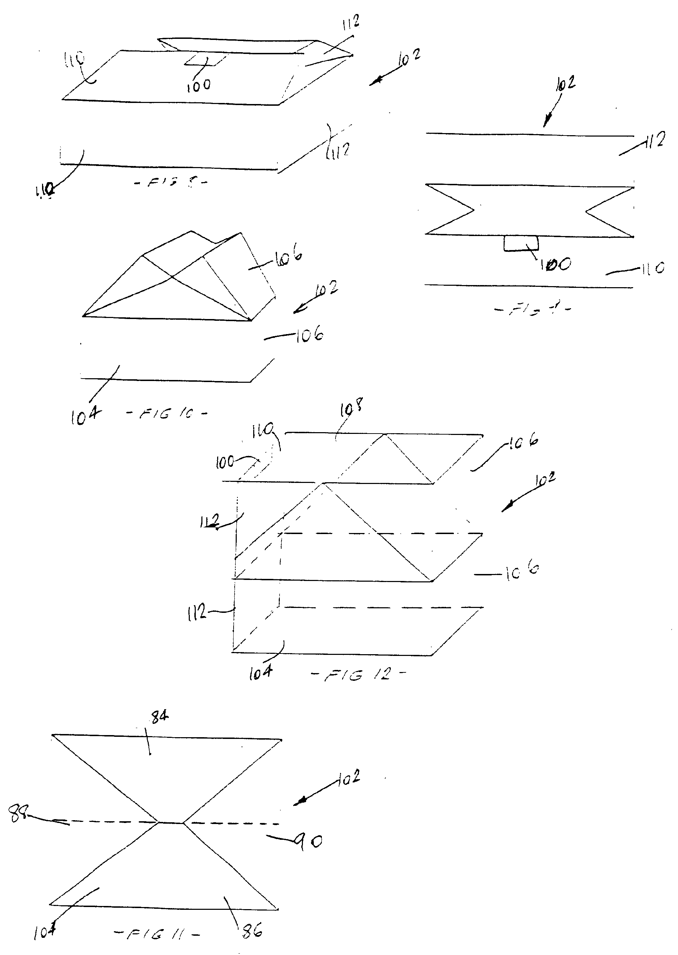

referring now to Figures 8 to 12, the one-piece blank 60 of Figure 7 is shown as having been made up into a container 102 in the form of a box having a base 104 and side walls 106, 108, 110 and 112. The side walls 106 to 112 are formed by folding the portions 62, 64, 66, and 68 about the fold lines 62A, 64A, 66A, and 68A (Figure 7) and adhering the portion 70 to the portion 62 so as to form a sleeve, and then folding the flaps 88 and 90 about fold lines 88A and 90A (Figure 7), followed by the folding of the flaps 84 and 86 about fold lines 84A and 86A (Figure 7) so as to form the base 104. The base 104 will preferably be sealed along the junction lines formed by the overlapping flaps 84, 86, 88, and 90.

Although not shown in the drawings, the container shown in Figures 8 to 12, will contain a predetermined quantity of an absorbent material, which may be natural or engineered, the material being capable of absorbing liquids such as oil, grease and similar substances. Such material may, for example, be coir pith or granules. Thus the combination of the container and the absorbent material forms an oil drainage kit. When exposed to the oil, grease or other substances, the contaminated material and the substances soaks to an incorporated level to be considered as a solid. The contaminated absorbent material may have too much substance present for the survival of neutralising agents which can include enzymes and/or bacteria, such that it may be desirable to include a module within and additional to the absorbent material. This module may be a mixture of absorbent, food source and enzyme/bacteria which is compressed or protected within a slow release barrier from which the neutralising agents may work. The absorbent material and the module may work independently or in conjunction with each other. The included module, which will take a number of hours to reconstitute (once exposed to liquid), will expand, introducing a clean area of sufficient volume for the bacteria to multiply and digest the liquid which has been absorbed.

When the absorbing process is finished, the container may be closed and sealed and, because the liquid - oil or the like - is now considered a solid since it has been absorbed by the absorbent material, the closed container may be disposed of in a regulated and environmentally acceptable manner.

Thus the invention provides disposable containers which can be used for a variety of purposes, which can be moved from a closed position to an open position in order to increase its volume, and which contains an absorbent material which is capable of neutralising the waste material to enable the closed container and waste material to be disposed of as household or domestic waste, and/or in other regulated and environmentally acceptable manners. The container and absorbent material together therefore form a kit which can be used, not only for the purposes described herein, but for other similar purposes.

## Claims

1. A disposable container comprising a box structure formed from a blank which is creased and scored to enable said box structure to be opened from a closed position to an open position, the volume of said box structure in its open position being greater than the volume of the box structure in its closed position, said box structure containing an absorbent material.

2. A disposable container according to Claim 1, wherein the volume of said box structure in its open position is at least twice as great as the volume of the box structure in its closed position.

3. A disposable container according to Claim 1 or Claim 2, wherein said blank is a one-piece blank of cardboard or similar material.

4. A disposable container according to any of Claims 1 to 3, wherein said container is wholly or partially lined with impervious

5. A disposable container according to any of Claims 1 to 4, wherein said box structure is generally diamond-shaped in cross-section in its closed position and generally rectangular in its open position.

6. A disposable container according to any of the preceding Claims, wherein said blank includes a locking device in the form of a fold-over strip and locking tab to provide rigidity in use of the container.

7. A disposable container according to any of Claims 1 to 6, wherein said absorbent material contained in said box structure is cat litter.

8. A disposable container according to Claim 7, wherein the cat litter contained in the box structure is contained in a bag or tube prior to use.

9. A disposable container according to any of Claims 1 to 4, wherein said box structure is generally rectangular or square in both its closed and open positions.

10. A disposable container according to Claim 9, wherein said box structure contains a predetermined quantity of an absorbent material, said material being natural or engineered and being capable of absorbing liquids such as oil, grease and similar substances.

11. A disposable container according to Claim 10, wherein said absorbent material is coir pith or granules.

12. A disposable container according to Claim 11, wherein said absorbent material includes a module.

13. A disposable container according to Claim 12, wherein said module comprises a mixture of absorbent, food source and enzyme/bacteria compressed or protected within a slow release barrier.

14. A cat litter kit comprising a box structure containing an absorbent material.

15. A drainage kit comprising a box structure containing an absorbent material.
